(19) Europäisches Patentamt
European Patent Office
Office européen des brevets

(11) Publication number: **0 006 308**
**B1**

# (12) EUROPEAN PATENT SPECIFICATION

(45) Date of publication of patent specification: **18.04.84**

(51) Int. Cl.³: **C 09 D 3/72**, C 09 D 3/68, C 08 J 7/04, C 09 D 3/58

(21) Application number: **79300937.4**

(22) Date of filing: **24.05.79**

(54) **In-mould coating compositions containing functional group terminated liquid polymers and method of covering surface defects of a moulded thermoplastic article therewith.**

(30) Priority: **08.06.78 US 913825**
**26.12.78 US 972912**

(43) Date of publication of application:
**09.01.80 Bulletin 80/1**

(45) Publication of the grant of the patent:
**18.04.84 Bulletin 84/16**

(84) Designated Contracting States:
**BE CH DE FR GB IT NL SE**

(56) References cited:
**FR - A - 2 176 877**
**GB - A - 1 457 935**
**US - A - 3 806 490**
**US - A - 4 020 036**

(73) Proprietor: **ICI AMERICAS INC**
**Concord Pike & New Murphy Road**
**Wilmington Delaware 19897 (US)**

(72) Inventor: **Feltzin, Joseph**
**102 East Sutton Place**
**Wilmington New Castle Delaware 19810 (US)**
Inventor: **Galvin, Thomas Jerome**
**4 Crown Court**
**Wilmington New Castle Delaware 19810 (US)**
Inventor: **Kuehn, Erich**
**1807 Floral Drive**
**Wilmington New Castle Delaware 19810 (US)**

(74) Representative: **Wood, Dennis John Cecil et al,**
**Imperial Chemical Industries PLC Legal Department: Patents PO Box 6**
**Welwyn Garden City Herts, AL7 1HD (GB)**

**EP 0 006 308 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# In-mould coating compositions containing functional group terminated liquid polymers and method of covering surface defects of a moulded thermoplastic article therewith

The present invention relates to coating compositions, and methods for applying them, for the purpose of covering surface defects such as sink marks, porous areas, microcracks and open knit lines occurring in moulded thermosetting plastic articles and especially fibre reinforced plastic articles. The invention is more particularly directed to stable liquid coating compositions having extended shelf life which can be used as a single system for coating cured compositions, are particularly useful when applied to moulded substrates that have improved adherence, and can be substituted for a sanding and primer coating operation normally required for such uncoated articles prior to painting.

In-mould coating, compositions and methods of application are well-known and in particular are described in British Patent 1,457,935. Such processes require injecting a resin compound mixed with reinforcing fibres, usually glass fibres, in the form of either a sheet moulding compound or a bulk moulding compound into a shaped mould, compressing the mould to form the dersired part applying heat to cure the resin, opening the mould slightly, injecting a coating composition to fill the space between the substrate and the open mould face, closing the mould slightly to squeeze the coating uniformly over the surface to a thickness of less than 0.5 mm usually from 0.01 to 0.13 mm and curing the coating. In the present state of the art, the coating compositions are derived from a two component system which when mixed begins to polymerise and normally gels within a few hours or days at which point it becomes useless as an in-mould coating composition. Furthermore, such two components require exact metering and measuring at the point of their use in order to derive a satisfactory coating having uniform properties and curing times.

The coating compositions present hereinafter provide the sheet moulder with a single mix composition which has stability for six or more months when stored under normal conditions and requires no accurate mixing of ingredients prior to use as an in-mould coating.

The invention provides therefore a method of forming a compression or injection moulded, fully cured, reinforced thermoset article with a compression or injection moulded coating having a smooth surface, superior adherence and adequate hardness.

The invention also provides a moulding composition useful in providing a superior compression or injection moulded coating having superior adherence, smoothness and durability when applied to a compression or injection moulded, completely cured reinforced thermoset article. The invention comprises:

A coating composition which comprises

(a) from 20% to 50% by weight of a vinyl ester urethane resin, of formula

$$C—I—(D—N)_tD—I—C \qquad (I)$$

wherein

C is a carbamyl — linked radical derived from a hydroxy-terminated ester obtained by reacting acrylic acid or methacrylic acid with ethylene oxide or propylene oxide, D is a radical derived from an organic polyol compound, I is a radical derived from a polyisocyanate, N is a radical derived from an unsaturated aliphatic dicarboxylic acid or an anhydride thereof and t is an integer equal to 1 to 5,

(b) from 30% to 60% by weight of a copolymerisable monomer and

(c) from 2% to 15% by weight of a functional-group-terminated liquid polymer having the general formula:

$$Y—\overset{\overset{O}{\|}}{C}—(B)—\overset{\overset{O}{\|}}{C}—Y \qquad (II)$$

wherein

Y is —OH, an aliphatic terminal-hydroxyl group-containing radical of 2—10 carbon atoms, a terminal vinyl group-containing radical of 2—10 carbon atoms or a univalent radical obtained by removing hydrogen from an amine group of an aliphatic, alicyclic, heterocyclic or aromatic amine containing at least two primary and/or secondary amine groups, and B is a polymeric backbone comprising carbon-carbon linkages, the said liquid polymer having a Brookfield viscosity of from 0.5 P.a.s. to 500 Pa.s (500 cps to 500,000 cps) when it is amine-terminated, from 100 Pa.s to 265 Pa.s (40,000 cps to 265,000 cps) when it is carboxyl-terminated and from 85 Pa.s to 600 Pa.s (85,000 cps to 600,000 cps) when it is vinyl-terminated.

Compositions comprising an unsaturated polyester, a solid carboxy-containing polymer of a conjugated diene and a vinyl monomer are described in U.S. Patent No. 4,020,036. These compositions differ from those of the present invention inasmuch as the latter contain a polyurethane not a polyester and a liquid not a solid polymer.

Generally the carbon-carbon linkage in (B) comprises at least 90% by weight of total polymeric backbone weight, more preferably at least 95% by weight of total polymeric backbone weight. The

amine terminated polymers contain an average from 1.7 to 3 primary and/or secondary amine groups per molecule of polymer, more preferably from 1.7 to 2.3 primary and/or secondary amine groups per molecule. The viscosities of the polymers as hereinabove defined, are measured using a Brookfield RVT viscometer at 27°C.

The reactive liquid polymers can be prepared from available polymers having the required polymeric backbone but different functional groups and in particular from carboxyl-terminated polymers. For example, reactive liquid polymers may be prepared as described in U.S. Patent No. 4,058,657 (such teachings are hereby incorporated by reference). Carboxyl-terminated or ester-terminated liquid polymers having a carbon-carbon backbone are reacted with at least one aliphatic, alicyclic or heterocyclic amine containing at least two primary and/or secondary amine groups. Amine-terminated liquid polymer is also prepared by reacting an acid chloride-terminated liquid polymer having a carbon-carbon backbone with at least one aliphatic, alicyclic, heterocyclic or aromatic amine containing at least two primary and/or secondary amine groups.

The carboxyl-terminated polymers used in manufacturing the reactive liquid polymers, especially the amine-terminated materials, may contain polymerised units of at least one vinylidene monomer having at least one terminal ethylenically unsaturated group which may be selected from the group consisting of (a) mono-olefins containing 2 to 14 carbon atoms, but preferably 2 to 8 carbon atoms such as ethylene, propylene, isobutylene, 1-butene, 1-pentene, 1-hexene, 1-dodecene and the like; (b) dienes containing 4 to 10 carbon atoms more preferably 4—8 carbon atoms such as butadiene, isoprene, 2-isopropyl 1,3 butadiene, chloroprene and the like; (c) vinyl and allyl esters of carboxylic acids containing 2—8 carbon atoms such as vinyl acetate, vinyl propionate, allyl acetate and the like; (d) vinyl and allyl ethers, having allyl radicals containing 1—8 carbon atoms such as vinyl methyl ether, allyl methyl ether and the like; and (e) acrylic acids and acrylates such as ethyl acrylate, butyl acrylate, hexyl acrylate, 2-ethylhexyl acrylate, dodecyl acrylate, octadecyl acrylate, methoxyethyl acrylate, butoxyethyl acrylate, hexylthioethyl acrylate, $\beta$-cyanoethyl acrylate, cyanooctyl acrylate, ethyl methacrylate, methyl methacrylate, and mixtures thereof.

The above described vinylidene monomers are readily epimerized with 0—50% and more preferably up to 35% by weight of at least one comonomer selected from the group consisting of (f) vinyl aromatics such as styrene, $\alpha$-methyl styrene, chlorostyrene, vinyl toluene and the like; (g) vinyl nitrile such as acrylonitrile, methacrylonitrile and the like; (h) vinyl halide such as vinyl bromide, vinyl chloride and the like; (i) divinyls and diacrylates such as divinyl benzene, divinyl ether, diethylene glycol diacrylate and the like; (j) amides of ethylenically unsaturated carboxylic acids containing 2—8 carbon atoms such as acrylamide and the like; and (k) allyl alcohol and the like.

Examples of preferred liquid carboxyl-terminated polymers include carboxyl-terminated polyethylene, carboxyl-terminated polyisobutylene, carboxyl-terminated polybutadiene, carboxyl-terminated polyisoprene, carboxyl-terminated poly(ethylacrylate) as well as carboxyl-terminated copolymers of butadiene and acrylonitrile and of butadiene and styrene. Carboxyl-terminated copolymers of butadiene with acrylonitrile or styrene are found to be especially useful. These polymers may contain from 50—100% by weight of butadiene, from 0—40% by weight of acrylonitrile or styrene and from 0.4—10% by weight of carboxyl, based upon the total weight of the polymer. Of particular suitability are materials wherein the mole ratio of butadiene/acrylonitrile average 5/1 and have carbon-carbon chains in the range of 200—300 carbon atoms. Carboxyl-terminated liquid polymers can be prepared by free radical polymerisation using carboxyl-containing initiators and/or modifiers as disclosed in U.S. Patent 3,285,949 and by solution polymerisation using lithium metal or organo metallic compounds and post treating the polymer to form carboxyl groups as disclosed in U.S. Patents 3,135,716 and 3,431,235. The polymers can also be prepared by reacting liquid polymers having other than terminal carboxyl groups with compounds so as to yield carboxyl groups. For example, they can be prepared from hydroxyl-terminated liquid polymers by reaction with dicarboxyl compounds. The essential features of the polymer are that it have at least terminal carboxyl groups and a polymeric backbone comprising carbon-carbon linkage. The presence of ethylenic unsaturation in the carbon chain appears to produce no significant improved results. Once a carboxyl-terminated polymer has been formed it can be isolated by methods well-known to the art in order to produce acid chloride-terminated liquid polymers. Furthermore, it can be esterified to provide ester-terminated polymers, all of which are reactive with amines to produce the amine-terminated liquid polymer useful in the practice of this invention.

Amines which react well with the carboxyl-terminated, ester-terminated and acetyl-terminated polymers described above include aliphatic amines containing 1—20 carbon atoms, more preferably 1—12 carbon atoms and at least 2 primary and/or secondary amine groups. Also suitable are alicyclic amines containing 4—20 carbon atoms, most preferably 4—12 carbon atoms and at least 2 primary and/or secondary amine groups. Heterocyclic amines may also be used which contain from 2—20 carbon atoms, more specifically 2—12 carbon atoms and at least 2 primary and/or secondary amine groups. Preferably the amine has 2 amine groups which may be 2 primary or 2 secondary or 1 primary and 1 secondary.

Examples of suitable amines just described include aliphatic amines such as ethylenediamine, 1,2-propanediamine, 1,3-propanediamine, 1,4-butanediamine, 2-methyl-1,2-propanediamine, 1,5-pentanediamine, 1,6-hexanediamine, 1,7-heptanediamine, 1,8-octanediamine, 1,10-decanediamine, 1,12-dodecanediamine and the like; aliphatic polyamines such as diethylenetriamine, triethylenetetramine, tetraethylenepentamine, bis(hexamethylene) triamine, 3,3'-iminobispropylamine and the like; alicyclic diamines and polyamines such as 1,2-diaminocyclohexane, 1,8-p-menthanediamine and the like; and heterocyclic diamines and polyamines such as 4-(aminomethyl)-piperidine; piperazine; N-(aminoalkyl)piperazines wherein each alkyl group contains from 1 to 12 carbon atoms, more preferably 1 to 6 carbon atoms, such as N-(2-aminoethyl)piperazine, N-(3-aminopropyl)piperazine, N,N'-bis(3-aminopropyl)piperazine and the like.

More preferably the amines just described contain at least two primary and/or secondary amine groups having different reactivities which makes the amine-termination reaction more likely than the coupling of the liquid polymers, and a smaller amine excess is required in order to avoid coupling. Examples of more preferred amines include some alicyclic amines such as 1,8-p-menthanediamine and the like; and some heterocyclic amines such as 4-(aminomethyl)piperidine and N-(aminoalkyl)-piperazines wherein the alkyl group contains from 1 to 12 carbon atoms, more preferably 1 to 6 carbon atoms, such as N-(2-aminoethyl)pieprazine, N-(3-aminopropyl)piperazine and the like. Excellent results were obtained using N-(2-aminoethyl)piperazine.

Aromatic diamines and polyamines can be used to produce amine-terminated polymers. The high temperature required for aromatic amine reaction with carboxyl-terminated polymers causes excessive degradation of reactants and products and is therefore much less preferred. However, aromatic amines react well with the acyl-terminated polymers described heretofore. Suitable aromatic amines contain at least two primary or secondary amine groups bonded directly to at least one aromatic nucleus. Examples of suitable aromatic amines include 4,5-acenaphthenediamine, 3,5-diaminoacridine, 1,4-diaminoanthraquinone, 3,5-diaminobenzoic acid, 2,7-fluorenediamine, 1,5-naphthalenediamine, 1,8-naphthalenediamine, 2,4-toluenediamine, 2,6-toluenediamine, o-phneylenediamine, m-phenylenediamine, p-phenylenediamine and the like.

A solvent is not required for the amine-termination reaction but may be used. Mixtures of solvents may also be used. Suitable solvents include aliphatic and cycloaliphatic ethers containing from 3 to 10 carbon atoms, more preferably from 3 to 6 carbon atoms, such as tetrahydrofuran, diethylether and the like; halogenated aliphatic hydrocarbons containing from 1 to 10 carbon atoms, more preferably from 1 to 6 carbon atoms, such as chloroform, carbon tetrachloride, 1,2-dichloroethylene, trichloroethylene, tetrachloroethylene and the like; and esters containing from 3 to 10 carbon atoms, more preferably from 3 to 6 carbon atoms, such as ethyl acetate, n-butyl acetate, hexyl acetate, benzyl acetate, methyl propionate, ethyl propionate and the like. Also suitable as solvents and more preferred are aromatic compounds having the formula:

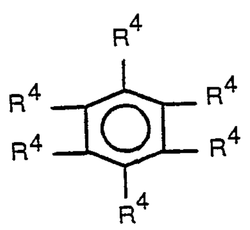

wherein

$R^4$ is hydrogen, halogen or an alkyl radical containing 1 to 3 carbon atoms, and at least two $R^4$'s are hydrogen. More preferably $R^4$ is hydrogen, chlorine or an alkyl radical containing 1 to 2 carbon atoms, and at least three $R^4$'s are hydrogen. Suitable aromatic solvents include benzene, chlorobenzene, toluene, o-, m-, and p-xylene, o-, m- and p-diethylbenzene, cumene, mesitylene and the like.

A sufficient quantity of at least one amine described heretofore may be reacted with a carboxyl-terminated, ester-terminated or acid-chloride-terminated liquid polymer described heretofore in order to produce an amine-terminated liquid polymer containing from 1.7 to 3 primary and/or secondary amine groups per molecule. Typically the average number of total carboxyl, ester or acid chloride groups in a liquid polymer before reaction will be from 1.7 to 3 groups per molecule, more preferably from 1.7 to 2.3 groups per molecule. In this typical case, from 1.2 to 6 mole equivalents and more, more preferably from 1.2 to 3 mole equivalents of at least one amine described heretofore can be used per mole equivalent of carboxylated, esterified or acylated liquid polymer described heretofore. However, when the carboxylated, esterified or acylated liquid polymer also contains polymerised therein appreciable amounts of acrylic acid, acrylates or the like, the amount of amine reacted must be limited so that the amine-terminated liquid polymer contains no more than 1.7 to 3 primary and/or secondary amine groups per molecule.

No catalyst is required, and many types of mixing apparatus can be used in the amine termination reaction. For example, simple mixers can be used, including turbine stirrers as well as propeller mixers. Reaction components can be combined in any order. The reaction mixture may be heated (or refluxed if

a solvent is used) at a temperature from 80°C to 150°C, typically for 1 to 6 hours. The amine-terminated liquid polymer may be purified by vacuum distillation or by washing with a solvent such as a benzene-methanol mixture, followed by drying the polymer. Amine content of the amine-terminated liquid polymers can be analysed qualitatively by infrared spectroscopy. Amine content can also be analysed quantitatively following the procedure described by Siggia, Quantitative Organic Analysis via Functional Groups, N.Y. Wiley and Sons, Inc. 1963, p. 452—456.

The amine-terminated polymers used in examples 1—34 are prepared readily by following the above-described procedures. For example, a dipiperazino-terminated poly(butadiene/acrylonitrile) having the general formula:

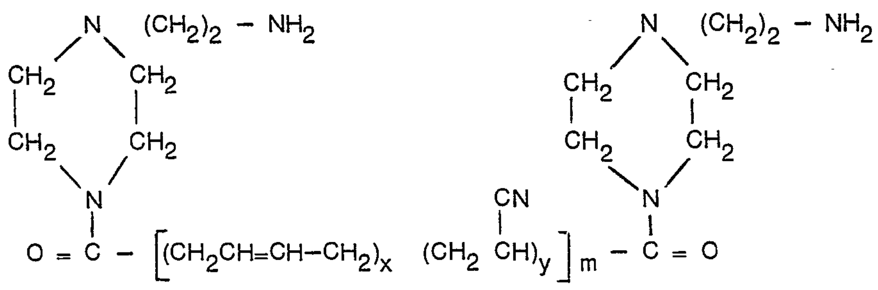

wherein

x is 5, y is 1, and m is 10 and the butadiene content is 70% by weight of the polymer, the acrylonitrile content is 17% by weight of the polymer and the amine end group content is 14% by weight of the polymer. This material has a Brookfield viscosity of 200 Pa.s (200,000 cps) at 27°C; 0.050—0.055 amine equivalents per 100 weight, an equivalent weight based on 4 amino hydrogens of 840—925; a specific gravity of 0.938 and a refractive index of 1.5172. This polymer is sold by B. F. Goodrich Company as HYCAR ATBN (1300 x 16) (HYCAR is a Trade Mark) and can be made by copolymerising a mixture of acrylonitrile with butadiene in the presence of a peroxide catalyst in mol ratios of 1/5 thereafter dicarboxylated and reacted with N-(2-aminoethyl)piperazine by a method described above.

Liquid carboxyl-terminated polymers may be prepared by a free-radical polymerisation using carboxyl-containing initiators and/or modifiers as disclosed in U.S. Patent 3,285,949 and by solution polymerisation using lithium metal or organo metallic compounds and post treating the polymers to form carboxyl groups as disclosed in U.S. Patents 3,135,716 and 3,431,235. The polymers can also be prepared by reacting liquid polymers having other terminal functional groups which react with carboxyl-terminated materials. For example, liquid carboxyl-terminated polymers can be prepared from liquid hydroxyl-terminated polymers by reaction with dicarboxyl compounds or anhydrides. Liquid halogen-terminated polymers can be reacted with unsaturated anhydrides in the presence of Lewis acids to yield carboxyl groups. A preferred liquid carboxyl-terminated polymer includes copolymers of butadiene and acrylonitrile. These polymers may contain from 50 to about 100% by weight of butadiene and 40% by weight acrylonitrile. One such liquid polymer is sold under the trade mark HYCAR CTBN (1300 x 8) and has a viscosity of 125 Pa.s (125,000 cps) at 27°; a molecular weight in the range of 3,500; 2.37% carboxyl groups; a functionality of 1.85; and an acrylonitrile content of 17% and a specific gravity at 25°C of 0.948. The use of this material is demonstrated in Examples 30 and 31.

Hydroxyl-terminated liquid polymers can be prepared by post reacting carboxyl-terminated polymers, as disclosed in U.S. Patents 3,551,471 and 3,551,472; by free-radical polymerisation of monomers using hydroxyl containing initiator, as disclosed in U.S. Patent 2,344,632 and by solution polymerisation using lithium or organo-metallic catalyst and post reacting the product to form the hydroxyl groups, as disclosed in U.S. Patents 3,135,716 and 3,431,235. Preferred hydroxyl-terminated polymers include hydroxyl-terminated copolymers of butadiene and acrylonitrile, such as that sold as HYCAR HTBN (1300 x 17) which is a diesterdiol having a functionality slightly less than 2.0, a viscosity averaging 130,000 cps at 27°C and acrylonitrile content averaging 16.5%. The use of such material is demonstrated in Examples 32 and 33.

Vinylidene-terminated liquid polymers can be prepared by reaction of a liquid polymer having at least terminal functional groups selected from the group consisting of amine, carboxyl, hydroxyl and mercaptan with a compound containing both an oxirane group and a vinylidene group, such as demonstrated in U.S. Patent 4,058,657. A preferred liquid polymer as prepared by reacting glycidylacrylate with dicarboxyl-terminated copolymers of butadiene and acrylonitrile, such as that sold as HYCAR BTBNX (1300 x 23) which has a viscosity of 280,000 cps; 3.8% acrylic vinyl; 16.2% acrylonitrile and a specific gravity at 25°C of 0.973. The use of such material is demonstrated in Example 34.

The above described functional group terminated liquid polymers having 1.7—3 functional groups per mol are present in the coating compositions accordng to the invention in admixture with a copolymerisable vinyl ether urethane resin and a copolymerisable monomer.

Monomers may be selected from vinyl monomers e.g. styrene, divinyl benzene, hexanediol diacrylate, 2-ethylhexyl acrylate, butyhl acrylate and neopentyldiol diacrylate, pentaerythritol triacrylate, glycidylacrylate and their corresponding methacrylate analogs.

Copolymerisable with the vinyl monomers and liquid polymers are vinyl ester urethane resins of the following general formula:

$$C—I—(D—N)_tD—I—C$$

wherein

D is a radical derived from an organic polyol; N is a radical derived from an unsaturated aliphatic dicarboxylic acid or an anhydride thereof; I is a radical derived from a polyisocyanate; C is a carbamyl-linked radical derived from a hydroxy-terminated ester of acrylic or methacrylic acid; t is an integer equal to from 1 to 5.

These vinyl ester urethane resins are preferably prepared as described in U.S. 3,876,726 and copending European Publication No. 0,002,129 and by condensing a polyoxyalkylene bisphenol A maleate or fumarate, a polyisocyanate and a hydroxyl-terminated ester of acrylic or methacrylic acid.

Bisphenol A derivatives are condensates of polyoxyalkylene bisphenol A containing 2—20 oxyalkylene units per mol. These materials may be prepared by first reacting a bisphenol A with an alkylene oxide such as ethylene oxide or propylene oxide and thereafter reacting 2 moles of said condensate with 1 mol of an unsaturated aliphatic dicarboxylic acid or anhydride thereof. In addition to bisphenol A, substituted derivatives of bisphenol A type compounds may be utilised having thereon up to two substituents per benzene ring. Especially preferred are derivatives wherein the substituents are chosen from chlorine, bromine, fluorine and methyl groups in positions ortho to the hydroxyl groups.

The polyoxyalkylene derivatives of bisphenol A are prepared by reacting bisphenol with an alkylene oxide such that the phenolic hydrogens are displaced by polyoxyalkylene chains averaging 1—8 oxyalkylene units per chain. Of particular interest are those compositions having 2—16 oxyalkylene units per mole of bisphenol A. Increased flexibility of the cured coating results as the oxyalkylene chain units are increased.

Unsaturated dicarboxylic acids and anhydrides which are preferred in preparing derivatives useful in the present combination include, for example, maleic acid and fumaric acid and their corresponding anhydrides. The amount of unsaturated aliphatic dicarboxylic acid or anhydride employed in the preparation of the polyester portion should be such that the mol ratio of alkoxylated bisphenol A to acid or anhydride is equal to 2/1 to 6/5.

Representative polyoxyalkylene bisphenol A polyether derivatives which may be employed include, for example, polyoxypropylene (2) bisphenol A, polyoxyethylene (2.2) bisphenol A, polyoxypropylene (2.2) tetrabromobisphenol A, polyoxypropylene (3) bisphenol A, polyoxypropylene (4) bisphenol A, polyoxypropylene (6) bisphenol A and polyoxypropylene (16) bisphenol A. Corresponding polyoxypropylene and polyoxyethylene derivatives of tetrabromobisphenol A and tetramethyl bisphenol A can be included.

In addition to or in place of the polyether polyols described above may be employed aliphatic diols and triols such as ethylene glycol, propylene glycol, butylene glycol, triethylene glycol, neopentyl glycol and 2,2,4-trimethyl-1,3-pentanediol, hexamethylene glycol, trimethylol propane, glycerol, pentaerythritol and the like.

In preparing the vinylester urethane resins, the polyisocyanate may be selected from diisocyanates, triisocyanates and isocyanates having up to 5 isocyanate groups per mol and/or mixtures thereof. Such aliphatic diisocyanates include, for example, methylene-bis(4-cyclohexylisocyanate), isophorone diisocyanate, etc. Aromatic diisocyanates include toluene diisocyanate, diphenylmethane 4,4′-diisocyanate, p-phenylene diisocyanate, dichlor diphenyl methane diisocyanate, dimethyl diphenyl methane diisocyanate, dibenzyl diisocyanate, diphenyl ether diisocyanate and the like. For example, diisocyanates of the formula:

$$OCN—Ph—X—Ph—NCO$$

wherein

Ph is an aromatic ring and wherein X may be a valence bond or an alkylene radical containing 1 to 5 carbon atoms, or where X is oxygen, sulphur, sulphoxide or sulphone are useful.

Polyfunctional isocyanates having an average isocyanate functionality of more than 2, such as polymethylene polyphenylene polyisocyanates are sold under the trade marks of RUBINATE M Polyisocyanate and PAPI 901 Polyisocyanate, which have about 2.4—3 isocyanate groups per mol. Mixtures of diisocyanates and polyisocyanates can also be used. When toluene diisocyanate is used it includes a mixture of the 2,4 and 2,6 isomers. The amount of diisocyanate or polyisocyanate employed should be equal to at least 2 mols per mol of bisphenol A derivative employed.

The hydroxy-terminated esters of acrylic or methacrylic acids which are used to form vinyl-terminated urethane resins are prepared by reacting acrylic acid or methacrylic acid with an alkylene oxide selected from the group consisting of ethyleneoxide and propyleneoxide. The reaction is carried

out by methods that are well-known in the art. The following are representative of the materials which may be employed including, for example, hydroxypropyl methacrylate, hydroxyethyl methacrylate, hydroxyethyl acrylate, hydroxypropyl acrylate, polyoxyethylene (2) acrylate, polyoxyethylene (2) methacrylate, polyoxyethylene (3) acrylate, polyoxyethylene (3) methacrylate, polyoxypropylene (2) acrylate, polyoxypropylene (2) methacrylate polyoxypropylene (3) acrylate and polyoxypropylene (3) methacrylate.

The amount of acrylate or methacrylate employed should be equal to at least one mol per mol of unreacted isocyanate group on said above described urethane ester. Preferred vinylester urethane resins are made according to the following examples:

Example A
Vinyl Ester/Urethane Resin

Into a two litre reaction flask equipped with a stirrer, thermometer, nitrogen inlet tube and distillation head there is added 4 mols of polyoxypropylene bisphenol A containing an average of 2.2 mols of propylene oxide per mol of bisphenol A and 2 mols of maleic anhydride. The resulting reaction mixture is heated from 210° to 215°C and held for 5 hours. A vacuum is applied for 1 hour while maintaining a temperature of from 210—215°C. 1 mol of this diester is further reacted in the presence of 1.44 grams of hydroquinone, and heated to 80°C with 2 mols of hydroxypropylmethacrylate and 2 mols of toluene diisocyanate and mixed for a period of 1 hour. The temperature of the reaction mixture is permitted to rise to 135°C and held at that point for 1/2 hour. The resultant light coloured solid has a melting point of 97°C, an acid number of 7.6, a saponification number of 201, a hydroxyl number of 22 and no residual unreacted isocyanate. The resulting resin is ground to a white finely divided powder and dissolved to from a 50% solids in styrene solution.

Example B
Vinylester/Urethane Resin

According to the procedure of Example A, 4 mols of polyoxypropylene bisphenol A containing an average of 6 mols of propylene oxide per mol of bisphenol A and 2 mols of maleic anhydride are reacted and thereafter condensed with a mixture containing 2 molar equivalents of toluene diisocyanate and 2 mols of hydroxyethyl acrylate.

Example C
Vinyl Ester/Urethane Resin

According to the procedure of Example A, polyoxypropylene bisphenol A containing an average of 16 mols of propylene oxide per mol of bisphenol A and maleic anhydride are condensed to form a polyester urethane and thereafter reacted with a mixture containing 2 molar proportions of toluene diisocyanate and hydroxyethyl acrylate per mol of polyester.

Example D
Vinyl Ester/Urethane Resin

According to procedure as outlined in Example A, a molar portion of polyoxyethylene bisphenol A, having an average of 6 mols of ethylene oxide per mol of bisphenol A and a 1 molar equivalent of maleic anhydride are condensed and thereafter reacted with a mixture containing 2 mols of toluene diisocyanate and 2 mols of hydroxypropyl methacrylate.

Example E
Vinyl Ester/Urethane Resin

A two molar proportion of polyoxypropylene bisphenol A having an average of 6 mols of propylene oxide per mol of bisphenol A is reacted with a molar portion of maleic anhydride as described in Example A. 2.7 mols of this diester maleate is then reacted with a mixture of polyisocyanate having an average functionality of 2.7 isocyanate groups per mol which may be considered as a mixture of 4,4′-diphenylmethane diisocyanates and other polyisocyanates sold under the trade mark Rubinate M. The product is then reacted in admixture with 2.7 mols hydroxypropyl acrylate until the resin is free of unreacted isocyanate groups.

Example F
Vinyl Ester/Urethane Resin

According to the procedure as outlined in Example A, a diester prepared by condensing a two molar portion of hexanediol with one molar portion of maleic anhydride is thereafter reacted with a two molar portion of toluene diisocyanate and a two molar portion of hydroxyethyl acrylate. This material is dissolved in styrene to prepare a 70% resin-in-monomer solution.

Example G
Vinyl Ester/Urethane Resin

According to the procedure as outlined in Example A, a two molar portion of triethylene glycol is condensed with a one molar portion of maleic anhydride and thereafter reacted with a two molar

equivalent of toluene diisocyanate and a two molar equivalent of hydroxyethyl acrylate. This material is dissolved in styrene to form a 70% resin-in-monomer solution.

Example H
Vinyl Ester/Urethane Resin

According to the procedure as outlined in Example A, a two molar portion of neopentylglycol is condensed with a one molar portion of maleic anhydride and thereafter reacted with a two molar equivalent of toluene diisocyanate and a two molar equivalent of hydroxyethyl acrylate. This material is dissolved in styrene to form a 70% resin-in-monomer solution.

Example I
Vinyl Ester/Urethane Resin

According to the procedure as outlined in Example A, a two molar portion of 2,2,4-trimethyl-1, 3-pentanediol is condensed with a one molar portion of maleic anhydride and thereafter condensed with a two molar equivalent of toluene diisocyanate and a two molar equivalent of hydroxyethyl acrylate. This material is dissolved in styrene to form a 70% resin-in-monomer solution.

The coating compositions of the invention are homogeneous mixtures of the above-described components.

In addition to these components, the blend may contain anti-oxidants, mould release agents, adhesion promoters, pigments, fillers, dispersing agents and catalysts.

A translucent coating is made by blending the liquid amine-terminated polymers, the vinyl ester urethane components, along with monomers, anti-oxidant, mould release agent and free radical type initiator catalyst. Translucent compositions are listed as parts by weight of the blend in Table 1, while pigmented coatings are described in Tables II and III.

These coating compositions are cured in contact with fully cured sheet moulding compositions as shown in the following examples:

Example J
Polyester Sheet Moulding Resin

Into a 12" x 12" flat mould is placed a gelled pancake made according to a process of U.S. Patents 4,062,826 and 4,073,828 containing 65% fibreglass and 35% of a polyurethane thickened resin composition containing 90 parts by weight of a 40% styrene solution of preformed polyester resin comprising isophthalic acid, maleic acid and propylene glycol; 4.5% by weight of a polyol mixture containing 9 parts polyoxyethylene bisphenol A, having an average of 2 ethylene oxide units and 1 part by weight of a polyoxypropylated bisphenol A containing 2 mols of propyleneoxide per mol of bisphenol A; 0.2 parts of a styrene solution containing 10% parabenzoquinone; 1 part by weight of dibutyltin dilaurate; 1 part by weight triethylamine; 3 parts by weight zinc stearate; 1 part of a peroxy ketal catalyst, such as (1,1-di-(t butyl peroxy) cyclohexane or 1,1-di-(t butyl peroxy) 3,3,5 trimethyl cyclohexane in 75% phthalate plasticiser) and 5.5 parts of Rubinate M, a commercially available 4,4' diphenylmethane polydiisocyanate having an average of 2.7 isocyanate groups per mol is moulded into a sheet having a thickness of 6.4 mm at a temperature of 135—150°C under a pressure of 27 ats. After 2 minutes the mould is opened and 5—10 grams of peroxide catalysed coating compositions as described in Tables I and II are added from a syringe or automatically. The mould is closed under 27 ats pressure and after two minutes the coating cured over the SMC part moulded and then taken from the mould.

After 24 hours the cured coatings are tested for adhesion to the cured substrate according to a procedure outlined in the American Society for Testing Materials Test ASTM D—3359—74 otherwise referred to as the crosscut tape test. Adhesion is rated from 0—5, 5 indicating the best adhesion. The rating for each composition is listed in Tables I, II and III below.

Example K
Polyester Sheet Moulding Resin

A gelled sheet moulding composition is made by blending 30% fibreglass and 70% of a resin composition having 60 parts of a polyester resin described in Example J; 6 parts styrene; 11.24 parts of the polyol mix described in Example J; 24.28 parts prepolymer prepared by reacting 1 mol of Rucoflex S—1011—110 (Rucoflex is a trade mark) with 2 mols of toluene diisocyanate and having terminal isocyanate groups; 0.2 parts 10% parabenzoquinone; 0.6 parts triethylamine; 1.0 part of a 75% solution of the ketal catalyst, described in Example J; 3 parts of zinc stearate; 150 parts calcium carbonate; and 4.48 Rubinate M polyisocyanate having a functionality of 2.7 isocyanate groups per mol.

Example L
Polyester Sheet Moulding Resin

A sheet moulding compound containing 30% fibreglass and gelled resin having 16.8 parts of a commercially available ethylenically unsaturated polyester PARAPLEX P340 (PARAPLEX is a trade

mark) (polymethylmethacrylate having carboxyl groups in styrene); 0.56 zinc stearate; 0.7 magnesium hydroxide; 0.28 parts t-butylperoctoate catalyst; and 42 parts calcium carbonate.

This substrate was coated and tested as described in Example J, the results of which are listed in Tables I, II and III.

Example M

Sheet Moulding Composition

A sheet moulding composition is made by blending polyester containing 30% glass and 70% gelled resin containing 92 parts polyester resin as described in Example J; 4 parts polyol mix as described in Example J; 1 part styrene; 0.02 parts 10% solution parabenzoquinone; 0.1 part polyoxyalkylene diamine condensate containing 3 mols of polypropylene oxide and 1 mol ethylene oxide sold under the trade mark RA—800 by Union Carbide Chemical Corporation; 0.1 part dibutyltin dilaurate catalyst; 1.0 part peroxide catalyst described in Example J; 4 parts zinc stearate; 140 parts aluminium trihydrate (Alcoa Aluminium Co. C—331) and 4.4 parts Rubinate M polyisocyanate (Rubinate is a trade mark).

The above compositions were tested as described in Examples J and L, the results of which are listed in Tables I, II and III as Examples 1—34.

In addition to the polymerising components, the coating composition may contain a commonly used mould release agent in order to ensure the formation of a smooth surface. Metallic soaps such as zinc stearate and other agents such as the natural product Lecithin and duPont's Zelec UN aliphatic phosphate have performed satisfactorily (Zelec is a trade mark). Various other common additives which are normally incorporated with the coating composition such as extenders, flexibilizers and colloidal silica may be used in accordance with standard moulding practice. Coloured pigments, when added to the coating composition, make it possible to fill sink marks and other defects to provide a glossy, pigmented surface all in one operation, so that when the part is removed from the mould it is ready for use without any additional operations such as hand sanding, finishing and conventional finish coating. Such coloured primer coats are usually made by incorporating carbon black, clay, iron oxide, lithophone, mica, silicioúis materials, titanium dioxide and coloured pigments.

The reaction between the ethylenically unsaturated vinyl ester urethane and the copolymerisable monomer is usually activated by the presence of a catalyst, for example, a peroxide like benzoyl peroxide, cyclohexanone peroxide, ditertiary butyl peroxide, dicumyl peroxide and tertiary butyl perbenzoate. Some of these catalysts react at low temperatures to initiate free radicals, while others are activated at higher temperatures, and others by an accelerator such as a dilute solution of cobalt soap or an amine. The selection of the free radical initiator catalysts is important if one is to control the temperature at which the copolymerisable monomer polymerisation takes place. Inhibitors are sometimes used to prevent premature action by the catalyst. In the performance of the present invention, it is preferred that the polyvinylidene polymerisation takes place within the mould at the temperature of the mould.

The compositions of the invention may also be used as a spray type primer when certain circumstances are required to repair a fender part which has been damaged to the point where a smooth surface must be generated outside the mould. In such instances, the spray composition may contain a light activated free radical initiating catalyst to cure the coating composition.

In addition to the reactive polymerising materials may be added a minor portion (2—10% by weight) of an anti-swelling agent selected from the groups consisting of epoxide resins having reactive ethoxide groups which include, for example, Cardura E available from Shell Chemical Company (Cardura is a trade mark) which is a glycidyl ester produced by reacting epichlorohydrin and a mixture of saturated highly branched mainly tertiary monocarboxylic acids having 9—11 carbon atoms; Genepoxy N 205 (Genepoxy is a trade mark), which is a modified diglycidyl ether of bisphenol A, available from General Mills, Inc.; Epon 812 (Epon is a trade mark), which is diglycidyl ether of glycerol, available from Shell Chemical Company; Epon 826, which is substantially pure diglycidyl ether of bisphenol A, and Epon 828, which is a slightly resinified form of Epon 826, available from Shell Chemical Company. Such other materials as glycidyl acrylate and glycidyl methacrylate are also useful. Such epoxide containing materials are useful in concentrations ranging from about 2 to 15% by weight of the coating composition and are thought to deactivate reactive amine sites which are available in the amine-terminated liquid polymers. The use of these anti-swelling agents is demonstrated in Examples 24—27 as shown in Table II.

TABLE I

TRANSLUCENT COATING COMPOSITIONS

| Example No. | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Coating Compositions Ingredients (Parts by weight) | | | | | | | | | | | | | | |
| Example A | 30 | | | | | | | | | | | | | |
| B | | 30 | | 30 | | | | | 30 | 30 | 30 | 30 | 30 | 30 |
| C | | | 30 | | | | 30 | 30 | | | | | | |
| D | | | | | | 30 | | | | | | | | |
| E | | | | | 30 | | | | | | | | | |
| *HYCAR–ATBN–1300X16 *HYCAR–ATB | 20 | 20 | 20 | 10 | 10 | 20 | 10 | 10 | 10 | 10 | 10 | 10 | 10 | 10 |
| 1,6 Hexanediol diacrylate | 20 | 20 | 20 | | | | | | | | | | | |
| 2 Ethylhexyl acrylate | 20 | 20 | 20 | 10 | 10 | 10 | 10 | | 10 | 10 | 10 | 10 | 10 | 10 |
| Styrene | 10 | 10 | 10 | 50 | 50 | 40 | 50 | 60 | 40 | 20 | | 20 | 40 | 50 |
| Butyl methacrylate | | | | | | | | | | | 50 | | | |
| Pentaerythritol triacrylate | | | | | | | | | | | | 10 | | |
| Hydroquinone (10% acetone solution) | 0.35 | 0.35 | 0.35 | 0.35 | 0.35 | 0.35 | 0.35 | 0.35 | 0.35 | 0.35 | 0.35 | 0.35 | 0.35 | 0.35 |
| Zinc Stearate | 3 | 3 | 3 | 1 | 1 | 1 | 1 | 1 | 1 | 1 | 1 | 1 | 1 | 1 |
| 75% Peroxyketal–USP–400P (1) | 1.0 | 1.0 | 1.0 | 1.0 | 1.0 | 1.0 | 1.0 | 1.0 | 1.0 | 1.0 | 1.0 | 1.0 | 1.0 | 1.0 |
| Tertiary butyl perbenzoate | | | | | | | | | | | | | 1.0 | |
| Tert-butyl peroctoate | | | | | | | | | | | | 1.0 | | |
| Substrate Coated | | | | | | | | | | | | | | |
| Example J | X | X | X | X | | X | X | X | | | X | X | | |
| K | | | | | X | | | | | X | | | X | X |
| L | | | | | | | | | X | | | | | |
| M | | | | | | | | | | | | | | |
| Test Results | | | | | | | | | | | | | | |
| ASTM Test D 3359–74 | 2 | 5 | 5 | 5 | 1 | 4–5 | 2 | 5 | 5 | 5 | 5 | 2 | 5 | 5 |

(1) 1,1-di-(t-butyl peroxy)cyclohexane in 75% phthalate plasticiser

*HYCAR is a trade mark.

TABLE II

PIGMENTED COATING COMPOSITIONS

| Example No. | 15 | 16 | 17 | 18 | 19 | 20 | 21 | 22 | 23 | 24 | 25 | 26 | 27 |
|---|---|---|---|---|---|---|---|---|---|---|---|---|---|
| Coating Compositions Ingredients (Parts by weight) | | | | | | | | | | | | | |
| Example B | 30 | 30 | 30 | | | 30 | 30 | 30 | 30 | | 30 | 30 | 30 |
| C | | | | 30 | 30 | | | | | 30 | | | |
| HYCAR–ATBN–(1300–16) | 10 | 10 | 10 | 5 | 5 | 10 | 10 | 5 | 10 | 10 | 10 | 10 | 10 |
| 2 Ethylhexyl acrylate | 10 | 10 | 10 | | | 10 | 5 | 10 | 10 | | | | |
| Styrene | 50 | 20 | 25 | 25 | 38 | 25 | 30 | 30 | 24 | 50 | 50 | 50 | 50 |
| Hydroquinone (10% acetone soln) | 0.35 | 0.35 | 0.35 | 0.35 | 0.35 | 0.35 | 0.35 | 0.35 | 0.35 | 0.35 | 0.35 | 0.35 | 0.35 |
| Lecithin (10% in styrene) | | 5 | | 5 | 5 | 5 | 5 | 5 | 10 | | | | |
| *Epon 828 | | 5 | | | | 5 | 5 | 5 | | | 2.5 | 5.0 | |
| Glycidyl methacrylate | | | | | | | | | | 10 | | | 10 |
| Zinc Stearate | 1.0 | 1 | 1 | 1 | 1 | 1 | 1 | 1 | 1 | | 1 | 1 | 1 |
| Colloidal Silica | 1.0 | | 1.0 | 1 | 1 | 1 | 1 | 1 | 1 | | | | |
| $TiO_2$ | 8 | 8 | 8 | 8 | 8 | 8 | 8 | 8 | 8 | | | | |
| $CaCO_3$ | 4 | | | | | | | | | | | | |
| Carbon black | 1 | 0.8 | 0·8 | 0.7 | 0.8 | 0·8 | 0.8 | 0.8 | 0.8 | | | | |
| Magnesium silicate | | 4.2 | 4.3 | 4.3 | 4.3 | 4.2 | 4.2 | 4.2 | 4.2 | | | | |
| Peroxyketal (75% soln) (1) | 1.0 | 1.0 | 2.0 | 1.6 | 2.0 | 2.0 | 2.0 | 2.0 | 2.0 | 1 | 1 | 1 | 1 |
| Viscosity (25 °C – cps) | – | – | 1710 | 1350 | 360 | 1414 | 1318 | 488 | 660 | | | | |
| Substrate Coated | | | | | | | | | | | | | |
| Example K | X | X | | | | | | | | X | X | X | |
| L | | | X | X | X | X | X | X | X | | | | X |
| Moulding Temperature °C | 138 | 138 | 150 | 150 | 150 | 150 | 150 | 150 | 150 | | | | |
| Time (seconds) | 120 | 120 | 70 | 70 | 40 | 70 | 70 | 70 | 70 | | | | |
| Pressure (psi) | 400 | 400 | 400 | 400 | 400 | 400 | 400 | 400 | 400 | | | | |
| Test Results | | | | | | | | | | | | | |
| ASTM D 3359–74 Rating | 5 | 5 | 5 | 5 | 5 | 5 | 5 | 5 | 5 | 4/5 | 4/5 | 5 | 5 |

(1) 1,1-di-(t-butyl peroxy)cyclohexane in 75% phthalate plasticiser

*Epon is a trade mark.

## TABLE III

### PIGMENTED COATING COMPOSITIONS

| Example No. | 28 | 29 | 30 | 31 | 32 | 33 | 34 |
|---|---|---|---|---|---|---|---|
| Ingredients | (Composition parts by weight) | | | | | | |
| Example (B) (30% Styrene) | 42.86 | 42.86 | 42.86 | 42.86 | 42.86 | 42.86 | 42.86 |
| HYCAR ATBN (1300 × 16) | 12.0 | 4.0 | | | | | |
| HYCAR CTBN (1300 × 8) | | | 12.0 | 4.0 | | | |
| HYCAR HTBN (1300 × 17) | | | | | 12.0 | 4.0 | |
| HYCAR VTBN (1300 × 23) | | | | | | | 12.0 |
| Styrene | 12.5 | 12.5 | 12.5 | 12.5 | 12.5 | 12.5 | 12.5 |
| Lecithin (90% Styrene) | 5.0 | 5.0 | 5.0 | 5.0 | 5.0 | 5.0 | 5.0 |
| Zinc Stearate | 3.0 | 3.0 | 3.0 | 3.0 | 3.0 | 3.0 | 3.0 |

All Compositions include:

| | |
|---|---|
| 4.2 | NYTAL 300 – Magnesium Silicate |
| 0.8 | STERLING R – Carbon Black – G L Cabot Corp |
| 8.0 | $T_1O_2$ |
| 1.0 | CABOSIL M5 – Colloidal Silica – G L Cabot Corp |
| 0.35 | Hydroquinone (90% acetone sol.) |
| 2% | (based on total weight) 1,1-di (t-butylperoxycyclohexane in 75% phthalate plasticiser)- USP 400P Witco Chemical Co. |

Substrate Coated Example L

| ASTM Test Results AD–3359–74B | 28 | 29 | 30 | 31 | 32 | 33 | 34 |
|---|---|---|---|---|---|---|---|
| Panel A at 20 seconds; 600 psi, 150°C | 5 | 5 | 4 | 4 | 5 | 4 | 4 |
| Panel B at 60 seconds; 600 psi, 150°C | 5 | 5 | 5 | 4 | 5 | 5 | 5 |

**Claims**

1. A coating composition which comprises
(a) from 20% to 50% by weight of a vinyl ester urethane resin of formula

$$C—I—(D—N)_tD—I—C \qquad (I)$$

wherein
C is a carbamyl-linked radical derived from a hydroxy-terminated ester obtained by reacting acrylic acid or methacrylic acid with ethylene oxide or propylene oxide, D is a radical derived from an organic polyol compound, I is a radical derived from a polyisocyanate, N is a radical derived from an unsaturated aliphatic dicarboxylic acid or an anhydride thereof and t is an integer equal to 1 to 5,
(b) from 30% to 60% by weight of a copolymerisable monomer and
(c) from 2% to 15% by weight of a functional-group-terminated liquid polymer having the general formula:

$$Y—\overset{\overset{O}{\|}}{C}—(B)—\overset{\overset{O}{\|}}{C}—Y \qquad (II)$$

wherein
Y is —OH, an aliphatic terminal-hydroxyl group-containing radical of 2—10 carbon atoms, a terminal vinyl group-containing radical of 2—10 carbon atoms or a univalent radical obtained by removing hydrogen from an amine group of an aliphatic, alicyclic, heterocyclic or aromatic amine containing at least two primary and/or secondary amine groups, and B is a polymeric backbone comprising carbon-carbon linkages, the said liquid polymer having a Brookfield viscosity of from 0.5 Pa.s to 500 Pa.s (500 cps to 500,000 cps) when it is amine-terminated, from 100 Pa.s to 150 Pa.s (100,000 cps to 150,000 cps) when it is hydroxy-terminated, from 40 Pa.s to 265 Pa.s (40,000 cps to 265,000 cps) when it is carboxyl-terminated and from 85 Pa.s to 600 Pa.s (85,000 cps to 600,000 cps) when it is vinyl-terminated.

2. A coating composition according to claim 1 characterised in that the carbon-carbon linkage in (B) comprises at least 90% by weight of the total polymeric backbone weight.

3. A coating composition according to claim 1 or claim 2, characterised in that the functional-group-terminated liquid polymer contains an average from 1.7 to 3 terminal functional groups per molecule.

4. A coating composition according to any one of the preceding claims characterised in that the polymeric backbone B contains polymerised units of at least one vinylidene monomer having at least one terminal ethylenically unsaturated group which is derived from:
(a) a mono-olefine containing 2 to 14 carbon atoms, or
(b) a diene containing 4 to 10 carbon atoms, or
(c) a vinyl or allyl ester of a carboxylic acid containing 2 to 8 carbon atoms, or
(d) a vinyl or allyl ether, or
(e) acrylic acid or an acrylate, or
(f) an epimer of a vinylidene monomer defined in (a) to (e) with up to 50% by weight of a vinyl aromatic, a vinyl nitrile, a vinyl halide, a divinyl or a diacrylate, an amide of an ethylenically unsaturated carboxylic acid or allyl alcohol.

5. A coating composition according to claim 4 characterised in the polymeric backbone B contains copolymerised units of butadiene with styrene or acrylonitrile.

6. A coating composition according to any one of the preceding claims characterised in that Y is a univalent radical obtained by removing hydrogen from an amine group of an aliphatic amine containing 1 to 12 carbon atoms, an alicyclic amine containing 4 to 20 carbon atoms or a heterocyclic amine containing 2 to 20 carbon atoms the amine containing two amine groups which are 2 primary or 2 secondary or 1 primary and 1 secondary.

7. A coating composition according to claim 6 characterised in that the heterocyclic amine is N-(aminoalkyl)piperazine or 4-(aminomethyl)piperidine.

8. A coating composition according to any one of the preceding claims characterised in that the copolymerisable monomer is styrene, divinyl benzene, hexanediol diacrylate, 2-ethylhexyl acrylate, butyl acrylate, neopentyldiol diacrylate, pentaerythritol triacrylate, glycidylacrylate or a methacrylate analogue of said acrylate esters.

9. A coating composition according to any one of the preceding claims characterised in that in the compound

$$C—I—(D—N)_tD—I—C$$

D is derived from a polyoxyalkylene bisphenol A having 2 to 20 oxyalkylene units per mol, or from an aliphatic diol or triol, N is derived from maleic or fumaric acid or from maleic anhydride, I is derived from methylene-bis(4-cyclohexylisocyanate), isophorone diisocyanate, toluene diisocyanate, p-phenylene diisocyanate, or a diisocyanate of formula OCN—Ph—X—Ph—NCO wherein Ph is an aromatic ring and X may be a valence bond, an alkylene radical containing 1 to 5 carbon atoms, oxygen, sulphur, sulphoxide or sulphone.

C is derived from the reaction product of acrylic acid or methacrylic acid with ethylene oxide and/or propylene oxide.

10. A composition according to any one of the preceding claims characterised in that it contains a free radical initiator catalyst and/or an anti-swelling agent having reactive epoxide groups.

11. A method of covering surface defects of a moulded thermosetting plastic article characterised in that a coating composition according to any one of the preceding claims is applied to the surface and is then polymerised.

**Patentansprüche**

1. Überzugsmittel, welches folgendes enthält:

(a) 20 bis 50 Gew.-% eines Vinylesterurethanharzes, der Formel

$$C—I—(D—N)_tD—I—C \qquad (I),$$

worin C für ein Radikal mit Carbamylanbindung steht, das sich von einem durch Umsetzung von Acrylsäure oder Methacrylsäure mit Äthylenoxid oder Propylenoxid erhaltenen hydroxyabgeschlossenen Ester ableitet, D für ein Radikal steht, das sich von einer organischen Polyolverbindung ableitet, I für ein Radikal steht, das sich von einem Polyisocyanat ableitet, N für ein Radikal steht, das sich von einer ungesättigten aliphatischen Dicarbonsäure oder einem Anhydrid derselben ableitet, und t für eine ganze Zahl von 1 bis 5 steht,

(b) 30 bis 60 Gew.-% eines copolymerisierbaren Monomers und

(c) 2 bis 15 Gew.-% eines mit funktionellen Gruppen abgeschlossenen flüssigen Polymers der allgemeinen Formel

$$Y—\overset{\overset{\displaystyle O}{\|}}{C}—(B)—\overset{\overset{\displaystyle O}{\|}}{C}—Y \qquad (II),$$

worin Y für —OH, ein eine endständige Hydroxylgruppe enthaltendes aliphatisches Radikal mit 2 bis 10 Kohlenstoffatomen, ein eine endständige Vinylgruppe enthaltendes Radikal mit 2 bis 10 Kohlenstoffatomen oder ein einwertiges Radikal, das durch Wegnahme eines Wasserstoffs von einer Amingruppe eines aliphatischen, alicyclischen, heterocyclischen oder aromatischen, mindestens zwei primäre und/oder sekundäre Amingruppen enthaltenden Amins erhalten worden ist, steht und B für ein Brookfield-Gerüst mit Kohlenstoff-Kohlenstoff-Gruppierungen steht, wobei das flüssige Polymer eine Brookfield-Viskosität von 0,5 Pa s bis 500 Pa s (500 cps bis 500000 cps) aufweist, wenn es aminabgeschlossen ist, 100 Pa s bis 150 Pa s (100000 cps bis 150000 cps) aufweist, wenn es hydroxyabgeschlossen ist, 40 Pa s bis 265 Pa s (40000 cps bis 265000 cps) aufweist, wenn es carboxylabgeschlossen ist, und 85 Pa s bis 600 Pa s (85000 cps bis 600000 cps) aufweist, wenn es vinylabgeschlossen ist.

2. Überzugsmittel nach Anspruch 1, dadurch gekennzeichnet, daß die Kohlenstoff-Kohlenstoff-Gruppierungen in (B) mindestens 90 Gew.-% des Gesamtgewichts des polymeren Gerüsts ausmachen.

3. Überzugsmittel nach Anspruch 1 oder 2, dadurch gekennzeichnet, daß das mit funktionellen Gruppen abgeschlossene flüssige Polymer durchschnittlich 1,7 bis 3 endständige funktionelle Gruppen je Molekül enthält.

4. Beschichtungszusammensetzung nach einem der vorhergehenden Ansprüche, dadurch gekennzeichnet, daß das polymere Gerüst B polymerisierte Einheiten aus mindestens einem Vinylidenmonomer enthält, das mindestens eine endständige äthylenisch ungesättigte Gruppe aufweist, die sich ableitet von:

(a) einem Monoolefin mit 2 bis 14 Kohlenstoffatomen oder

(b) einem Dien mit 4 bis 10 Kohlenstoffatomen oder

(c) einem Vinyl- oder Allylester einer Carbonsäure mit 2 bis 8 Kohlenstoffatomen oder

(d) einem Vinyl- oder Allyläther oder

(e) Acrylsäure oder einem Acrylat oder

(f) einem Epimer eines in (a) bis (e) definierten Vinylidenmonomers mit bis zu 50 Gew.-% einer aromatischen Vinylverbindung, eines Vinylnitrils, eines Vinylhalogenids, einer Divinylverbindung oder eines Diacrylats, eines Amids von einer äthylenisch ungesättigten Carbonsäure oder Allylalkohol.

5. Uberzugsmittel nach Anspruch 4, dadurch gekennzeichnet, daß das polymere Gerüst B copolymerisierte Einheiten aus Butadien mit Styrol oder Acrylonitril enthält.

6. Überzugsmittel nach einem der vorhergehenden Ansprüche, dadurch gekennzeichnet, daß Y

ein einwertiges Radikal ist, das durch Wegnahme eines Wasserstoffs von einer Amingruppe eines aliphatischen Amins mit 1 bis 12 Kohlenstoffatomen, eines alicyclischen Amins mit 4 bis 20 Kohlenstoffatomen oder eines heterocyclischen Amins mit 2 bis 20 Kohlenstoffatomen erhalten worden ist, wobei das Amin 2 Amingruppen enthält, bei denen es sich um 2 primäre oder 2 sekundäre oder um 1 primäre und 1 sekundäre Amingruppe handelt.

7. Überzugsmittel nach Anspruch 6, dadurch gekennzeichnet, daß das heterocyclische Amin aus N-(Aminoalkyl)-piperazin oder 4-(Aminomethyl)-piperidin besteht.

8. Überzugsmittel nach einem der vorhergehenden Ansprüche, dadurch gekennzeichnet, daß das copolymerisierbare Monomer aus Styrol, Divinylbenzol, Hexandioldiacrylat, 2-Äthylhexylacrylat, Butylacrylat, Neopentyldioldiacrylat, Pentaerythrittriacrylat, Glycidylacrylat oder einem Methacrylatanalogen dieser Acrylatester besteht.

9. Überzugsmittel nach einem der vorhergehenden Ansprüche, dadurch gekennzeichnet, daß in der Verbindung

$$C—I—(D—N)_tD—I—C$$

D sich von einem Polyoxyalkylen-bisphenol-A mit 2 bis 20 Oxyalkyleneinheiten je Molekül oder von einem aliphatischen Diol oder Triol ableitet, N sich von Malein- oder Fumarsäure oder von Maleinsäureanhydrid ableitet, I sich von Methylen-bis(4-cyclohexyl-isocyanat), Isophorodiioscyanat, Toluoldiisocyanat, p-Phenylendiisocyanat oder einem Diisocyanat der Formel OCN—Ph—X—Ph—NCO ableitet, worin Ph für einen aromatischen Ring steht und X für eine Valenzbindung, ein Alkylenradikal mit 1 bis 5 Kohlenstoffatomen, Sauerstoff, Schwefel, Sulfoxid oder Sulfon steht, und C sich von dem Reaktionsprodukt aus Acrylsäure oder Methacrylsäure mit Äthylenoxid und/oder Propylenoxid ableitet.

10. Zusammensetzung nach einem der vorhergehenden Ansprüche, dadurch gekennzeichnet, daß sie einen freien Radikale erzeugenden Initiatorkatalysator und/oder eine Antiquellemittel mit reaktiven Epoxidgruppen enthält.

11. Verfahren zum Bedecken von Oberflächenfehlern eines geformten Gegenstands aus einem thermisch härtenden Kunststoff, dadurch gekennzeichnet, daß ein Überzugsmittel nach einem der vorhergehenden Ansprüche auf die Oberfläche aufgebracht und dann polymerisiert wird.

**Revendications**

1. Composition de revêtement, qui comprend

(a) 20 à 50% en poids d'une résine d'uréthanne du type ester vinylique de formule

$$C—I—(D—N)_tD—I—C \qquad (I)$$

dans laquelle C est un radical à liaison carbamyle dérivé d'un ester à terminaison hydroxy obtenu par réaction d'acide acrylique ou d'acide méthacrylique avec l'oxyde d'éthylène ou l'oxyde de propylène, D est un radical dérivé d'un polyol organique, I est un radical dérivé d'un poly-isocyanate, N est un radical dérivé d'un acide dicarboxylique aliphatique insaturé ou d'un anhydride de cet acide et t est un nombre entier égal à 1—5

(b) 30 à 60% en poids d'un monomère copolymérisable et

(c) 2 à 15% en poids d'un polymère liquide terminé par un groupe fonctionnel, répondant à la formule générale:

$$Y—\overset{\overset{O}{\|}}{C}—(B)—\overset{\overset{O}{\|}}{C}—Y \qquad (II)$$

dans laquelle Y est un groupe —OH, un radical aliphatique contenant un groupe hydroxyle terminal ayant 2 à 10 atomes de carbone, un radical contenant un groupe vinyle terminal ayant 2 à 10 atomes de carbone ou un radical monovalent obtenu par élimination d'hydrogène d'un groupe amino d'une amine aliphatique, alicyclique, hétérocyclique ou aromatique contenant au moins deux groupes amino primaires et/ou secondaires, et B est un squelette polymérique comprenant des liaisons carbone à carbone, ledit polymère liquide ayant une viscosité Brookfield de 0,5 Pa.s à 500 Pa.s (500 cps à 500 000 cps) lorsqu'il a une terminaison amino, de 100 Pa.s à 150 Pa.s (100 000 cps à 150 000 cps) lorsqu'il a une terminaison hydroxy, de 40 Pa.s à 265 Pa.s (40 000 cps à 265 000 cps) lorsqu'il a une terminaison carboxyle et de 85 Pa.s à 600 Pa.s (85 000 cps à 600 000 cps) lorsqu'il a une terminaison vinyle.

2. Composition de revêtement suivant la revendication 1, caractérisée en ce que la liaison carbone à carbone de (B) constitue au moins 90% en poids du poids total du squelette polymérique.

3. Composition de revêtement suivant la revendication 1 ou la revendication 2, caractérisée en ce que le polymère liquide terminé par un groupe fonctionnel contient en moyenne 1,7 à 3 groupes fonctionnels terminaux par molécule.

4. Composition de revêtement suivant l'une quelconque des revendications précédentes, caractérisée en ce que le squelette polymérique B contient des motifs polymérisés d'au moins un monomère de vinylidène ayant au moins un groupe terminal à non-saturation éthylénique qui est dérivé:

(a) d'une mono-oléfine contenant 2 à 14 atomes de carbon, ou

(b) d'un diène contenant 4 à 10 atomes de carbone, ou

(c) d'un ester de vinyle ou d'allyle d'un acide carboxylique contenant 2 à 8 atomes de carbone, ou

(d) d'un éther de vinyle ou d'allyle, ou

(e) d'acide acrylique ou d'un acrylate, ou

(f) d'un épimère d'un monomère de vinylidène défini en (a) à (e) avec jusqu'à 50% en poids d'un composé aromatique vinylique, d'un nitrile vinylique, d'un halogénure de vinyle, d'un divinyle ou d'un diacrylate, d'un amide d'un acide carboxylique à insaturation éthylénique ou d'alcool allylique.

5. Composition de revêtement suivant la revendication 4, caractérisée en ce que le squelette polymérique B contient des motifs copolymérisés de butadiène avec le styrène ou l'acrylonitrile.

6. Composition de revêtement suivant l'une quelconque des revendications précédentes, caractérisée en ce que Y est un radical monovalent obtenu en éliminant de l'hydrogène d'un groupe amino d'une amine aliphatique contenant 1 à 12 atomes de carbone, d'une amine alicyclique contenant 4 à 20 atomes de carbone ou d'une amine héterocyclique contenant 2 à 20 atomes de carbone, l'amine contenant deux groupes amino qui sont deux groupes amino primaires ou deux groupes amino secondaires ou un groupe amino primaire et un groupe amino secondaire.

7. Composition de revêtement suivant la revendication 6, caractérisé en ce que l'amine hétérocyclique est une N-(aminoalkyl)-pipérazine ou la 4-(aminométhyl)pipéridine.

8. Composition de revêtement suivant l'une quelconque des revendications précédentes, caractérisée en ce que le monomère copolymérisable est le styrène, le divinylbenzène, le diacrylate d'hexanediol, l'acrylate de 2-éthylhexyle, l'acrylate de butyle, le diacrylate de néopentyldiol, le triacrylate de pentaérythritol, l'acrylate de glycidyle ou un analogue méthacrylique desdits esters acryliques.

9. Composition de revêtement suivant l'une quelconque des revendications précédentes, caractérisée en ce que dans le composé de formule:

$$C—I—(D—N)_tD—I—C$$

D est dérivé d'un polyoxyalkylène-bisphénol A ayant 2 à 20 motifs oxyalkyléniques par mole, ou d'un diol ou triol aliphatique, N est dérivé d'acide maléique ou fumarique ou d'anhydride maléique, I est dérivé de méthylène-bis(4-cyclohexylisocyanate), de diisocyanate d'isophorone, de diisocyanato-toluène, de p-phénylène-diisocyanate ou d'un diisocyanate de formule OCN—Ph—X—Ph—NCO dans lequel Ph est un noyau aromatique et X peut être une liaison de valence, un radical alkylène contenant 1 à 5 atomes de carbone, l'oxygène, le soufre, le groupe sulfoxyde ou le groupe sulfone.

C est dérivé d'un produit de réaction entre l'acide acrylique ou l'acide méthacrylique et l'oxyde d'éthylène et/ou l'oxyde de propylène.

10. Composition suivant l'une quelconque des revendications précédentes, caractérisée en ce qu'elle contient un catalyseur initiateur de radicaux libres et/ou un agent anti-gonflant portant des groupes époxyde réactifs.

11. Procédé pour recouvrir des défauts à la surface d'un article de matière plastique thermodurcissable moulé, caractérisé en ce qu'une composition de revêtement conforme à l'une quelconque des revendication précédentes est appliquée à la surface puis polymérisée.